Europäisches Patentamt

European Patent Office

Office européen des brevets

(11) Publication number: **0 222 992**
**A1**

# (12) EUROPEAN PATENT APPLICATION

(21) Application number: **86111827.1**

(22) Date of filing: **27.08.86**

(51) Int. Cl.⁴: **G 11 B 23/04**

(30) Priority: **27.08.85 JP 131260/85**

(43) Date of publication of application: **27.05.87**
**Bulletin 87/22**

(84) Designated Contracting States: **AT BE CH DE FR GB IT LI LU NL SE**

(71) Applicant: **Asahi Polyslider Co., Ltd., 4-3-4, Nishiawaji Higashi-Yodogawa-ku, Osaka-shi Osaka-fu (JP)**

(72) Inventor: **Morita, Susumu, 1-27-404, Ichiban-cho Kurakuen, Nishionomiya-shi Hyogo-ken (JP)**

(74) Representative: **Hoffmann, Klaus, Dr. rer. nat. et al, Hoffmann . Eitle & Partner Patentanwälte Arabellastrasse 4, D-8000 München 81 (DE)**

(54) Tape presser for VTR tape cassette.

(57) A tape presser for a VTR tape cassette comprising a base sheet (1) and a leaf of a nonmagnetic metal foil (2) attached to at least one surface of one end area of the base sheet (1) which is in contact with a VTR tape in use, which achieves smooth running of the VTR tape and does not damage the tape.

EP 0 222 992 A1

0222992

# TAPE PRESSER FOR VTR TAPE CASSETTE

## BACKGROUND OF THE INVENTION

### Field of the Invention

The present invention relates to a tape presser for a VTR tape cassette. More particularly, it relates to a tape presser for a VTR tape cassette comprising a base sheet and a leaf of a nonmagnetic metal foil attached to at least one surface of one end of the base sheet which is in contact with a VTR tape in use.

### Description of the Prior Arts

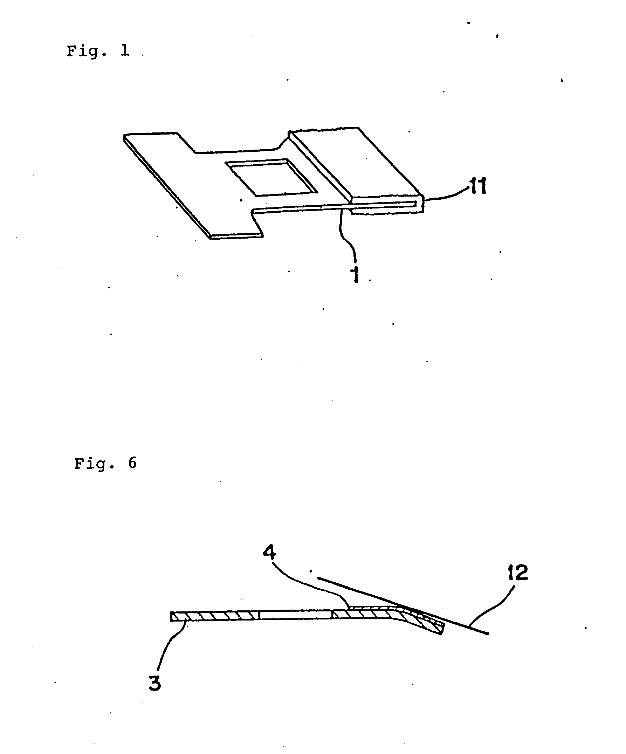

A VTR tape cassette includes a tape presser to apply tension to a VTR tape and to achieve smooth running of the tape. Fig. 1 is a perspective view of a typical tape presser comprising a base sheet 1 and a lubricating sheet 11. Conventionally, the lubricating sheet 11 is made of a sheet of a resin such as polytetrafluoroethylene, and folded and adhered to one end of the base sheet 1 which is in contact with the VTR tape. However, the conventional tape presser has various defects. For example, in a low temperature range, for example, lower than -5°C, a coefficient of friction between the lubricating material and the VTR tape is not so small that the tape surface is apt to be abrased by the material. In addition, stick slip tends to be caused, this resulting in deterioration of smooth running of the tape. Further, since the resinous lubricating material does not have such high electroconductivity as metal even if it is imparted with electroconductivity, static electricity is generated on the lubricating material during fast sliding action such as fast forwarding and rewinding of the tape, so that dusts or foreign particles are attracted by the material and cause scratch on the VTR tape surface, which is a cause of drop out.

SUMMARY OF THE INVENTION

One object of the present invention is to provide a tape presser for a VTR tape cassette having a low coefficient of friction against the VTR tape.

Another object of the present invention is to provide a tape presser for a VTR tape cassette which causes substantially no abrasion or flaw of the VTR tape.

Further object of the present invention is to provide a tape presser for a VTR tape cassette which enables smooth running of the VTR tape in a wide temperature range for example between -20 to +60°C.

Yet another object of the present invention is to provide a tape presser for a VTR tape cassette on which substantially no static electricity is generated.

These and other objects are accomplished by a base sheet and a leaf of a nonmagnetic metal foil attached to one end of the base which is in contact with a VTR tape in use.

BRIEF DESCRIPTION OF THE DRAWINGS

Fig. 1 is a perspective view of a tape presser for a VTR tape cassette,

Figs. 2 and 3 are perspective views of two preferred embodiments of the tape presser of the present invention,

Figs. 4 and 5 are cross sectional views of the tape presser of Fig. 3 along lines A-A' and B-B', respectively, and

Fig. 6 is a cross sectional view of another embodiment of the tape presser of the present invention.

DETAILED DESCRIPTION OF THE DRAWINGS

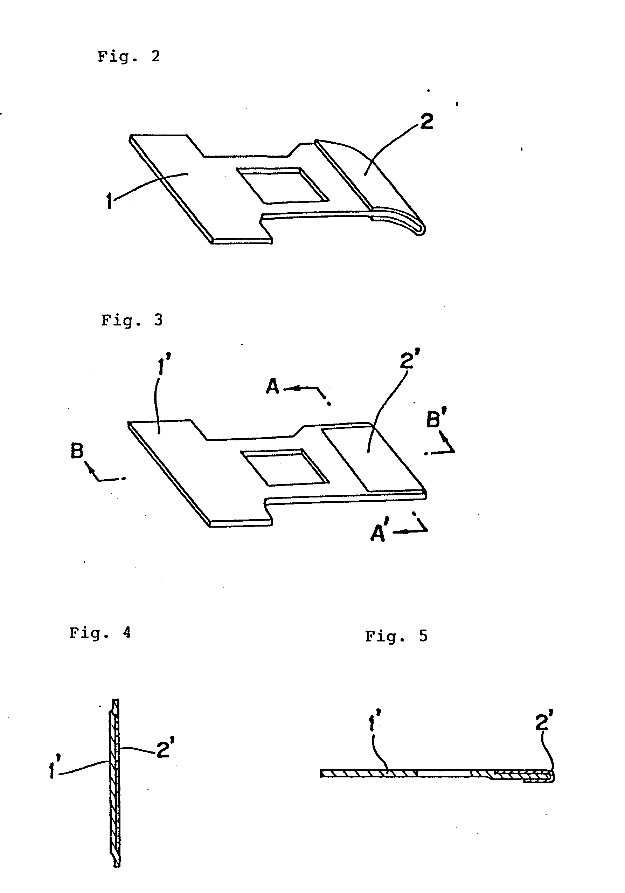

The tape presser according to the present invention comprises a base sheet 1, 1' or 3 and a sheet of a nonmagnetic metal foil 2, 2' or 4 as shown in Figs. 2, 3 or 6, respectively.

The leaf of the metal foil is attached to at least one surface of an end area of the base sheet which is in contact with the VTR tape in use. The leaf of the metal foil is preferably folded and attached to the end surface of the base sheet to cover both surfaces of the end area as shown in Figs. 2 and 3 although the leaf of the metal foil may be attached to one surface of the end area of the base sheet as shown in Fig. 6. In the latter case, the metal foil should be treated not to damage the VTR tape. For example, the leaf of the metal foil is slightly bent as shown in Fig. 6 so that the front edge of the metal foil does not contact and damage the VTR tape.

The leaf of the metal foil is attached to the base sheet with an adhesive although the folded leaf may be held on the end of the base sheet by resiliently pressing the end area with the folded leaf.

The base sheet may be made of any of conventionally used materials such as thermoplastic resins (e.g., polyester and polycarbonate). The thickness of the base sheet is preferably from 100 to 200 microns. The end of the base sheet to which the leaf of the metal foil is attached may have a dent as shown in Figs. 3, 4 and 5 so that the edges of the metal foil are surrounded by the base sheet material. The base sheet may be produced by stretching such as biaxial orientation or rolling.

Since the metal foil should be nonmagnetic, stainless steel foil is preferred. The thickness of the foil is preferably not larger than 50 microns. Preferably, the surface of the metal foil is completely smooth, although it may have some unevenness so far as the smooth tape running is not deteriorated.

The leaf of the metal foil may be flat as shown in Fig. 3 or slightly curved as shown in Fig. 2 so that a curved central portion of the foil is in contact with the VTR tape in use.

The tape presser of the present invention can be produced by a conventional method. For example, a biaxially oriented film of the base material is slit to a suitable width and a length of the metal foil is adhered to one surface of the slit film along its one edge. A part of the metal foil protruding from the edge of the film is folded back over the other surface of the film. Then, the film with the metal foil is continuously punched to produce the tape pressers of the invention.

Preferably, the base sheet is subjected to an antistatic treatment.

0222992

- 6 -

CLAIMS:

1. A tape presser for a VTR tape cassette comprising a base sheet (1, 1', 3) and a leaf of a nonmagnetic metal foil (2, 2', 4) attached to at least one surface of one end area of the base sheet (1, 1', 3) which is in contact with a VTR tape in use.

2. The tape presser according to claim 1, wherein the metal foil (2, 2', 4) is a stainless steel foil.

3. The tape presser according to claim 1, wherein the base sheet (1, 1', 3) is made of a thermoplastic resin.

4. The tape presser according to claim 1, wherein the leaf of the metal foil is attached to one surface of the end area.

5. The tape presser according to claim 1, wherein the leaf of the metal foil (1, 1') is folded and attached to both surface of the end area.

6. The tape presser according to claim 1, wherein the leaf of the metal foil (2') is flat.

7. The tape presser according to claim 1, wherein the leaf of the metal foil (2, 4) is slightly curved.

0222992

Fig. 1

11

1

Fig. 6

4

12

3

Fig. 2

2

1

Fig. 3

1'

A

2'

B'

B

A'

Fig. 4

1'

2'

Fig. 5

1'

2'

## European Patent Office

### EUROPEAN SEARCH REPORT

| | DOCUMENTS CONSIDERED TO BE RELEVANT | | EP 86111827.1 |

| Category | Citation of document with indication, where appropriate, of relevant passages | Relevant to claim | CLASSIFICATION OF THE APPLICATION (Int. Cl.4) |
|---|---|---|---|
| Y | DE - A1 - 3 142 831 (HITACHI) <br> * Fig. 2,4,7; page 8, line 8 - line 10 * <br> -- | 1,3 | G 11 B 23/04 |
| Y | DE - A - 2 204 259 (KROHN) <br> * Fig. 1,2; page 9, line 20 - page 10, line 6 * <br> -- | 1,3 | |
| Y | DE - A1 - 3 149 441 (FUJI) <br> * Fig. 1,2; page 5, lines 31-33 * <br> -- | 1,3 | |
| Y | DE - A - 2 323 327 (BASF) <br> * Fig. 2,3; page 8, line 36 - page 9, line 4 * <br> -- | 1,3 | TECHNICAL FIELDS SEARCHED (Int. Cl.4) |
| A | EP - A1 - 0 128 271 (A.T.B.) <br> * Fig. 1,2; abstract * <br> ---- | 1 | G 11 B 23/00 <br> G 11 B 15/00 |

The present search report has been drawn up for all claims

| Place of search | Date of completion of the search | Examiner |
|---|---|---|
| VIENNA | 28-11-1986 | BERGER |